# EUROPEAN PATENT SPECIFICATION

(11) **EP 4 007 796 B1**
(45) Date of publication and mention of the grant of the patent: **12.04.2023**
(21) Application number: 19755698.8
(22) Date of filing: 01.08.2019
(51) Int. Cl.: A01C 1/06, C09D 133/02

(54) **SUPERABSORBENT-BASED SUSPENSION SUITABLE FOR HYDROSTIMULATORY COATING OF SEEDS AND A METHOD OF COATING SEEDS WITH THE SUSPENSION**
AUF SUPERABSORBENS BASIERENDE SUSPENSION ZUR HYDROSTIMULATORISCHEN BESCHICHTUNG VON SAATGUT UND VERFAHREN ZUR BESCHICHTUNG VON SAATGUT MIT DER SUSPENSION
SUSPENSION À BASE DE SUPERABSORBANT APPROPRIÉE POUR L'ENDUCTION HYDROSTIMULATRICE DE SEMENCES ET PROCÉDÉ D'ENDUCTION DE SEMENCES AU MOYEN DE LADITE SUSPENSION

(43) Date of publication of application: 08.06.2022
(73) Proprietor: P E W A S S.R.O., 811 03 Bratislava (SK)
(72) Inventor: GELINGER, Viktor, 83106 Bratislava (SK); VALENTIN, Marian, 83101 Bratislava (SK); HORVÁTH, Ján, 811 09 Bratislava (SK); PETRA, Lukás, 080 01 Presov (SK)
(74) Representative: Kendereski, Dusan
(86) International application number: PCT/SK2019/050008
(87) International publication number: WO 2021/021030

(56) References cited:
- WO-A1-85/01736
- WO-A1-91/03149
- GB-A- 1 591 415
- US-A1- 2016 219 871
- US-A1- 2019 000 075
- US-B2- 7 504 445
- US-B2- 7 505 445
- SU LI-QIANG ET AL: "Super absorbent polymer seed coatings promote seed germination and seedling growth ofCaragana korshinskiiin drought", SCIENCE B: INTERNATIONAL BIOMEDICINE & BIOTECHNOLOGY, ZHEIJIANG UNIVERSITY PRESS, CN, vol. 18, no. 8, 12 August 2017 (2017-08-12), pages 696-706, XP036295603, ISSN: 1673-1581, DOI: 10.1631/JZUS.B1600350 [retrieved on 2017-08-12]
- Dan Anderson: "Talc and Graphite: What You Need to Know Before You Plant -AgWeb Talc and Graphite: What You Need to Know Before You Plant", , 11 June 2014 (2014-06-11), XP055725960, Retrieved from the Internet: URL:https://www.agweb.com/article/talc_and _graphite_what_you_need_to_know_before_you _plant_NAA_Dan_Anderson [retrieved on 2020-08-28]

## Description

### Field of Invention

A superabsorbent-based suspension, in particular for hydrostimulatory coating of seeds and a method of coating the seed with the suspension. The main use is in agriculture and horticulture. A superabsorbent (SAP = super absorbent polymer) is used to coat the seeds together with the active ingredients to bind water in the soil to increase the germination in the absence of water and consequently to increase the yields of crops, or to reduce the frequency of irrigation and reduce water evaporation from the soil, respectively. The ingredients used in combination with SAP will improve flow properties (reduce friction and abrasion) between the seeds and reduce any wear on the seed drill machine parts. The suspension can be used as a carrier of active ingredients and as a depth stabilizer.

### Background of the Invention

Agricultural production depends inter alia on the quality of seeds. The better the seed (with high germination capacity, pest resistance, ability to effectively use individual soil components such as nutrients and water), the greater the likelihood of higher yields. During germination, several metabolic processes take place in the seed. The germination time depends on the seed quality, environmental factors (temperature, water presence) and the like. However, the aim is to achieve optimum germination and defined plant growth even under adverse climatic conditions.

In recent years, the question of lack of soil moisture at the time of germination has come to the fore. In the past, the problem of seed germination in the absence of moisture was solved by a variety of hydration techniques designed to ensure rapid and optimal germination in order to help achieve stable production under appropriate economic conditions. For this reason, the seed was treated by various techniques before planting.

An example of the hitherto used technique for improving seed germination is the so-called "priming" (infiltration). This technique was developed by W. Heydecker et al. 1974, and includes osmotic control of water supply to seed using an aqueous solution of water-soluble polymers (polyethylene glycol, sodium polypropionate, and the like) or aqueous salt solutions (W. Heydecker, J. Higgins and R. L. Gulliver, 1973, Nature (London) 246 p.42-44; W. Heydecker, 1974, Univ. Nottingham Sch. Agr. Rep. 1973/1974:50-67; Zuo Weineng et al., 1987, Chinese Science Bulletin 32:1438).

Another technique is "drum priming". The technique was developed by H. R. Rows in 1987 and consists of spraying the seed in a rotating drum, directly controlling the weight of the water without using any other medium (GB 2192781 B).

The "solid matrix priming" technique developed by A. G. Taylor et al. in 1988, controls the water supply of the seed using a powdered material (Agro-Lig) as a medium (AG Taylor, DS Klein and TH Whitlow, 1988, Scientia Horticulturae 37 (1988) 1-11; US 4912874 A; EP 0309551 B1; WO 88/07318 A1).

Finally, another known technique is known as "matriconditioning". The technique developed by A. A. Khan et al. in 1990 controls the supply of water to the seed using water-soluble porous materials (Micro-Cel E, Zonolite) (A.A. Khan, H. Miura, J. Prusinski, I. Ilyas Matri-conditioning of seeds to improve emergence Proceedings National Symposium on Stand Establishment of Horticultural Crops, Minneapolis, MN Apr.4-6,1990).

These techniques moisturize the seed before sowing. However, they also have some disadvantages:
The priming technique is not suitable for large quantities at commercial level. The drum priming technique is simple, but problems are in precision mechanical control to control the amount of water and also technology.

The technique can treat the seeds in simple, slowly rotating devices, but the problem is in separating the seeds after treatment.

In addition to these procedures, there have been recent work on the use of superabsorbents - substances that bind water and then gradually release it to plants. Two techniques were developed:
- the first is the use of a superabsorbent for sowing into the soil, where the polymer is added to the sowing site together with the seed, which is based on a process where SAP is adhered to the whole substrate (ground)
- the second way is to apply the superabsorbent to the seed surface and then to sow it

Patent documents related to this technology include US 2004077498 A1, US 2008236037 A1, US 2010093535 A1, US 9169164 B2, US 9212245 B2, US 9238774 B2, US 2012258811 A1, US 2014298872 A1 and US 2012277099 A1.

Initially, the substances were applied to the seed using a system of slow-rotating drums, dispensers and dried in an oven (drum priming). The main disadvantage was the higher demand on the amount of substances used, their uneven distribution and the duration of the process.

It is possible to find methods in the prior art whereby superabsorbent (SAP) is applied to the seeds in powder form. With various variations, these are methods where an adhesive is applied to the seed and then the (powdered) SAP is added (powdered) (CN 106471952 A), or the ability of SAP to adhere to a wet surface is utilized (US 2012277099 A1), wherein the SAP can absorb water into its structure very quickly and efficiently, thereby attaching itself to the seed surface if the seed surface was previously wet. In both cases, SAP is dosed in powder form. In both cases, it is necessary that the seed be coated with either an adhesive or a substance that comprises a certain amount of water and leaves the seed surface suitably moist before dispensing SAP. Thus, in both cases, pre-treatment is required. one extra operation before dispensing SAP powder.

Both of these cases present several disadvantages. Most of these disadvantages result from the powder form of SAP. By dosing SAP powder, it is not possible to achieve a homogeneous seed coverage. Inhomogeneity of coverage is within one seed, but also in case of comparison of seeds with each other, or even between batches. A further disadvantage is that, in the case of powdered SAP, the SAP particles do not adhere to the seed surface sufficiently intensively and fall off during storage and sowing activities. This deficiency increases SAP consumption, and it reduces the effectiveness of the dressing process. SAP particles also increase the consumption of SAP, which do not come into contact with the seed surface during the dressing process because they are sucked off by the suction device.

The SAP particles adhered to the surface by the above methods result in a deterioration of the flow properties of the seed, and seed blockage may occur in the seed drill devices, or in other operations where the seed is transported by sifting. At the same time, the SAP particles anchored in this way are very sensitive to atmospheric moisture, which causes the SAP to stick, and thus to bond the seeds to each other, which causes storage, transport and sowing problems.

A significant disadvantage is that in the above methods the SAP dosing alone has to be preceded by a seed pre-treatment operation in order to attach the SAP particles to the surface. Such a limitation brings a further reduction in efficiency with respect to the time required for pre-treatment.

The pre-treatment process also affects the different quality of SAP attachment on the surface as well as the amount of SAP attached, which can have a negative effect if too much SAP or SAP adheres to the seed, or no impact if too little SAP is attached to the seed. Different amounts of SAP attached can result in different emergence dynamics and later developed plants, which can reduce overall yield.

From the point of view of health protection, the mentioned methods bring complications as very small SAP particles get into the atmosphere, thus worsening working conditions. The SAP particles may be released into the atmosphere when the SAP is metered into the seed dressing device, the discharge of the treated seed as well as the subsequent treatment of the treated seed.

The technological disadvantage is the limited use of seed dressing devices. As a priority, seed dressing devices are equipped with automatic liquid dispensing devices, but this possibility for SAP powder dispensing cannot be used. For dosing powder materials, the seed dressing device needs to be supplemented with a dosing device for powder materials, which brings additional costs. Application of SAP powder in seed dressing devices where powder dosing equipment is not available is not possible. In the mentioned method(s) it is further required that the application of SAP be followed by the dosage of singulating substances (Ss), also in powder form, requiring an additional powder material dosing device and hence additional costs.

The use of methods in continuous seed dressing devices would also be very problematic, or even impossible.

The international patent application WO 2005059023 A1 discloses a superabsorbent-based suspension suitable for coating a seed, comprising a superabsorbent, an adhesive dispersed or dissolved, preferably in an aqueous solution, and a bioactive growth-stimulating additive. The superabsorbent is a grafted starch copolymer (copolymer backbone) with e.g. acrylonitrile, acrylic acid or acrylamide (grafts). The suspension is applied to the seeds in an aqueous solution, causing premature absorption of water by the superabsorbent during the deposition process, bonding and aggregation of the individual treated seeds, and clogging of the seed drill devices.

The international patent application WO 0166668 A2 discloses a composition suitable for seed coating, comprising a sodium polyacrylate superabsorbent in the amount of 0.3 wt. %, a fertilizer (active ingredient) in the amount of 1.2 wt. %, polyethylene glycol 1450 in the amount of 23.5 wt. % and ethanol in the amount of 75 wt. %. This composition was applied to the surface of Pickseed^{™} grass seed. Another disclosed composition suitable for seed coating includes a sodium polyacrylate superabsorbent in the amount of 4.4 wt. %, a fertilizer (active ingredient) in the amount of 15.6 wt. %, polyethylene glycol 1450 in the amount of 30 wt. % and ethanol in the amount of 50 wt. %. This composition was applied to the surface of a rice seed at a ratio of 3.3:1 (seed:composition). Polyethylene glycol is used in the composition in particular as a lubricant and a component which will provide better mutual compatibility of other polymers, but not as an adhesive or film forming agent. A disadvantage is also the use of sodium salt of polyacrylate, which salinizes the soil by the addition of sodium cations.

The publication of Chen, Junwu et al. (Swelling behaviours of polyacrylate superabsorbent in the mixtures of water and hydrophilic solvents) describes the behaviour of polyacrylate superabsorbents (sodium polyacrylate) in a mixture of water and hydrophilic solvents (e.g., 20 %, 40 % and 60 % methanol or ethanol). The equilibrium of water absorption by the superabsorbent was determined at 10 min. and 48 hours, whereby the authors concluded that the addition of a low-polarity solvent (methanol, ethanol) greatly reduces the absorption capacity of the superabsorbent, especially on a short time scale. The publication details only sodium polyacrylate, but not its copolymers or polyacrylates with other counterions.

The publication of You, Ying-Cai et al. (Synthesis and swelling behaviour of crosslinked copolymers of neutralized maleic anhydride with other monomers) describes the behaviour of a maleic anhydride/acrylamide copolymer and a maleic anhydride/acrylamide/hydroxyethyl methacrylate copolymer with N,N'-methylene bisacrylamide as a crosslinking agent. The publication discusses the absorption capacity of these copolymers in solutions of alcohols (methanol, ethanol, glycol, glycerol) and water, also based on the synergy of non-ionic (OH, CONH₂) and ionic functional groups (COOK). Excess ionic functional groups increase the hydrophilicity and absorption capacity of the copolymer, while excess non-ionic groups reduce the absorption capacity. An apparent trend is a decrease in the absorption capacity of said copolymers with increasing concentrations of alcohol in aqueous solution (20 %, 40 % and 60 %), with ethanol showing the greatest decrease in absorption capacity of all the alcohols tested. Due to two carboxyl groups within one monomer unit, a disadvantage of maleic anhydride is a higher sensitivity to multivalent ions (2+, 3+) present in the soil (mainly Ca²⁺, Mg²⁺, Al³⁺), stronger intramolecular interactions within one polymer chain, more intensive flocculation between different polymer chains, and too strong (even irreversible) anchorage of monovalent ions (Na⁺, K⁺).

The international patent application WO 2013158284 A1 describes a method of reducing dustiness in seed sowing by means of a lubricant component applied to a seed with a layer of active substances (pesticides, etc.). The lubricant component comprises waxes of synthetic, vegetable and/or animal origin (e.g. polypropylene wax), and is characterized by lower seed dustiness than with talc or graphite. The lubricant component does not include any superabsorbent that would increase the absorption capacity or even ensure the absorption of water in this layer.

The international patent application WO 2007103076 A1 discloses a seed coating composition for improved binding of a bioactive component (e.g. insecticide, fungicide), while also improving the flow properties of the coated seeds in transport and sowing. The composition includes an adhesive (e.g., polyvinyl acetate or polyacrylate), a wax (e.g., natural, mineral or synthetic wax), a pigment (e.g., mica coated with titanium dioxide) and a stabilizer (suspending agent, humectant, biocide). The composition is applied wet to the seed in an aqueous solution, which in the case of polyacrylate (although functioning here as adhesive) may cause premature absorption of water before sowing into the soil.

The US patent application US 2015267063 A1 discloses a seed coating composition comprising an antistatic or electrically conductive additive, e.g. an allotropic modification of carbon (e.g. graphite) or an electrically conductive polymer.

The publication of Black et al. discloses the use of graphite and talc to improve seed flow properties.

The review of Wissler (Journal of Power Sources 156 (2006) 142-150) discloses various functional and structural properties of generic graphites and specific types thereof, such as flake graphite.

The Slovak utility model application SK 50110-2016 U1 and the Slovak patent application SK 50069-2016 A3 disclose a combination of substances (a coating composition) comprising a superabsorbent (polyacrylamide, polyacrylate or starch copolymers) and an adhesive solution in a mixture of water and ethanol, and preferably lubricants and biologically active substances. Superabsorbent present and applied to the seed separately in a dry state, which may increase dustiness, abrasion of the seed surface and uneven surface of the superabsorbent layer. The water-ethanol mixture is adapted to dissolve the adhesive (30 to 50 % by weight of the adhesive solution), wherein said amount of ethanol (20 to 40 % by weight of the adhesive solution) and water (10 to 50 % by weight of the adhesive solution) could cause premature absorption of water by the superabsorbent during deposition. Moreover, a method of seed coating with this combination in two steps is described, first the adhesive solution is applied to the seed and only in a subsequent step, the superabsorbent in a dry state.

The US patent application US 2016219871 A1 discloses seed treatments by means of polymeric hydrogels capable of absorbing water for improving seed germination performance in low moisture environments. Seed treatment compositions based on a cross-linked potassium poly-acrylate (BountiGel^{™} hydrogel by mOasis Inc.) are disclosed and exemplified on turf, corn and broccoli seeds. This hydrogel is coated on the seeds in a rotary seed coating machine (e.g. Aginnovation Rotary-6 seed machine) in a sequential manner in a powder formulation 1 following a pre-coating step of adhesive solution A. After coating the seed with the powder formulation 1, the seed is additionally coated with an adhesive solution B and a powder formulation 2, i.e. in the sequence A -> 1 -> A -> 1 -> B -> 2. Overall, the whole composition is coated on the seed in the amount of 7,5 wt. %. The adhesive solution A comprises 10-20 vol. % polyvinylpyrrolidone PVP40 in dichloromethane. The powder formulation 1 comprises 5 g cross-linked potassium poly-acrylate and 5 g powdered talc. The adhesive solution B comprises 20 vol. % polyvinyl acetate in dichloromethane. The powder formulation 2 comprises 1 g powdered potato starch and 9 g powdered talc. Furthermore, a method of coating a seed in a rotary seed coating machine is disclosed and exemplified on turf, corn and broccoli seeds. Moreover, the seed coating composition can comprise an active ingredient for improving the seed properties, e.g. a nutrient (N, NO₃⁻, K, P, Mg, Ca), a fertilizer, a pH regulating agent, an herbicide, a pesticide, or a fungicide.

The international patent application WO 8501736 A1 discloses a water absorbent seed coating composition comprising finely divided polyacrylate (no counterion indicated), finely divided polyacrylamide and finely divided graphite as a sticker. The polyacrylate and polyacrylamide form an "intimate mixture", but not a copolymer. Nonetheless, the polyacrylate can form a copolymer with grafted starch chains. The particles of polyacrylate and polyacrylamide preferably do not exceed 1000 µm, e.g. 60 µm for polyacrylate and 300 and 20 µm for polyacrylamide, the graphite particles preferably do not exceed 200 µm, e.g. 10 to 20 µm. The composition further comprises an active ingredient, i.e. a fertilizer, an insecticide, a pesticide, a fungicide or nitrogen fixing bacteria. In a preferred embodiment, the composition comprises 33.3 % graphite (10 to 20 µm particle size), 33.3 % internally cross-linked polyacrylate copolymer with grafted starch chains (60 µm particle size), 16.0 % cross-linked polyacrylamide (300 µm particle size) and 17.4 % cross-linked polyacrylamide (20 µm particle size). The coating step is performed either directly on the seed in a dry process (not indicating the number of steps) or in the soil prior to sowing in the form of aqueous slurry.

The article "Super absorbent polymer seed coatings promote seed germination and seedling growth of Caragana korshinskii in drought, Su Li-Qiang et al., 2017" describes a study of individual superabsorbents in seed coating compositions (e.g. *Caragana korshinskii* seeds) in five groups A-E, namely polyacrylamide (A), sodium polyacrylate (B), denatured polyvinyl alcohol branded as Balite^{™} efficient poly agent (C), copolymer of potassium polyacrylate and polyacrylamide branded as Hankeshu^{™} aquasorb (D) and a copolymer of sodium polyacrylate and polyacrylamide branded as Zhengyuan^{™} aquasorb (E). Ethylen cellulose was used as adhesive (1.5 % in absolute ethanol) and it was coated in solution prior to coating the seed with the superabsorbent. A mixture of attapulgite clay (= hydrated magnesium aluminium silicate) and talc was used as filler and lubricant additive in 2:1 ratio. The content of copolymer of potassium polyacrylate and polyacrylamide in the tested compositions was 1 wt. %, 4 wt. %, 7 wt. %, 10 wt. % and 13 wt. % and proved to be the most efficient superabsorbent due to the highest water sorption capacity, while the remaining components of the mixture were always attapulgite clay and talc in 2:1 ratio. The seed coating step was performed sequentially in a coating machine, whereby the adhesive was coated first in ethanolic solution, followed by the coating of powdered remaining components, which was repeated for 15 cycles.

The US patent US 7504445 B2 discloses an aqueous seed coating superabsorbent composition comprising a copolymer of potassium or ammonium polyacrylate and polyacrylamide (PAM, e.g. branded as Flobond^{™}), preferably with 10-40 mol. % of polyacrylate in the copolymer, and an NPK fertilizer and cellulose mulch. The resulting dose of superabsorbent represents 0.01-0.1 wt. % of the seed. The document discusses the substitution of sodium with potassium or ammonium due to soil salinization. Prior to seed coating, an aqueous solution of the copolymer of potassium or ammonium polyacrylate and polyacrylamide is prepared, to which solution an NPK fertilizer, cellulose mulch and the seed itself is added (in this order). The suspension is mixed for 30 min. and is then sprayed on the soil.

In the publication of Dan Anderson, 2014 (retrievable from https://www.agweb.com/article/talc_and_graphite_what_you_need_to_know_be fore_you_plant_NAA_Dan_Anderson, 27 November 2020) a composition comprising talc (as a lubricant) and graphite (as an antistatic additive) in the ratio 80:20 is disclosed, in order to improve flow properties of seeds and eliminating electric charge in seed planting devices. Further active substances are possible in the mixture.

The US patent application US 2019000075 A1 discloses a superabsorbent-based suspension suitable for hydro stimulatory coating of seeds, comprising a superabsorbent in the form of a copolymer of sodium acrylate and acrylamide in the range of 5 to 60, preferably 15 to 35 wt. %, binding and film-forming agents (such as PVP, PVAc, graphite) dispersed or dissolved in an aqueous solution, lubricant additives (such as graphite at a concentration of 67 wt. %) and suitable for improving flow properties of seeds and further additives, such as mineral or organic salts (potassium salts), dispersant organic polymers or biologically active substances for improving properties of the seed.

The international patent application WO 9103149 A1 discloses a superabsorbent-based semi-solid matrix composition suitable for hydrostimulatory encapsulation of seeds, comprising a superabsorbent in the form of a copolymer of potassium acrylate and acrylamide in the range of 1 to 25 wt. % of the dry matrix, binders (such as PVA or PVP) in the range of 0 to 40 wt. % of the dry matrix and further additives, such as peat moss, non-ionic surfactant and biologically active substances for improving properties of the seed.

The UK patent application GB 1591415 A discloses a dry particulate soil matrix composition of soil and soil amendments for improving water retention around the seed, comprising soil, a superabsorbent in the form of a copolymer of potassium acrylate and acrylamide, lubricant additives (such as graphite) suitable for improving flow properties of seeds in the range of 1 to 2 wt. % and further additives, such as soil amendments, possibly affecting plant growth, such as water, organic alcohols or talc without any apparent specific purpose.

### Summary of the Invention

It is an object of the invention to provide an environmentally neutral composition suitable for hydrostimulatory coating of seeds, which ensures water retention in the immediate vicinity of the sowed seed, higher germination and emergence of the plants, especially in dry conditions, and even growth. Further, the composition should be manageable and applicable to the seed in a more efficient manner than in the prior art with respect to meeting strict agricultural, industrial and safety standards and with improved mechanical properties of the coated seed (flow properties, dustiness, adhesion).

The above mentioned drawbacks in the prior art are remedied by the present superabsorbent-based suspension suitable for hydro stimulatory coating of seeds, comprising a superabsorbent, adhesives dispersed or dissolved in a solution of water and ethanol and/or water and isopropanol, lubricant additives suitable for improving the flow properties of the seeds and an antistatic additive suitable for electric charge elimination.

The superabsorbent, which is a copolymer of acrylate and acrylamide, is comprised in the range of 25 to 40 wt. % of the suspension. Preferably, the superabsorbent is a copolymer of potassium acrylate and acrylamide, wherein the potassium acrylate may be the result of partial or total neutralization of monomeric acrylic acid. The individual monomers may form an alternating, statistical, block or grafted copolymer structure, and may be in the proportion to each other, e.g. in the range of 25:75 to 75:25 (acrylate:acrylamide), e.g. 25:75, 30:70, 40:60, 50:50, 60:40, 70:30 or 75:25. During seed germination, the superabsorbent gradually degrades, and the acrylamide chains are degraded to ammonia, which together with the acrylic potassium salt provides the seed with important biogenic elements and nutrients. If sodium salt is used, undesirable soil salination occurs, which is one of the disadvantages of the prior art.

The suspension further comprises adhesives that serve to fix SAP and excipients. The adhesive component also serves as a film-forming component. As adhesives, polyvinyl acetate (PVAc), hydroxymethyl cellulose, hydroxyethyl cellulose, hydroxypropyl cellulose, carboxymethyl cellulose, polyvinylpyrrolidone, lignin sulphonate, acacia or saccharides can be used. Preferably, the adhesive is polyvinyl acetate because, as a compact and flexible polymer, it is capable of forming a thin and continuous film that closes the seed surface, thereby not exposing the superabsorbent to air humidity. In addition, polyvinyl acetate has a desirable level of biodegradability on seed. Too rapid biodegradation of the adhesive layer could occur before seed sowing, while too slow biodegradation would not allow optimal plant growth. The adhesives are dispersed or dissolved in a solution of water and ethanol and/or water and isopropanol, wherein the adhesive solution comprises water in the range of 0.1 to 8 wt. % of the suspension, ethanol and/or isopropanol in the range of 40 to 70 wt. % of the suspension and adhesive in the range of 1 to 10 wt. % of the suspension.

Another component are lubricant additives - auxiliaries improving flow properties. The lubricant may be graphite, talc, molybdenum disulphide, polytetrafluoroethylene, polypropylene or mixtures thereof. Preferably the lubricant is graphite and/or talc. The suspension comprises lubricant additives in the range of 0.1 to 15 wt. % of the suspension.

The suspension also comprises an antistatic additive in the range of 0.1 to 5 wt. % of the suspension to eliminate electric charge. Preferably, the antistatic additive is flake graphite.

The suspension may also comprise active substances which improve the properties of the seed, which may be nutrients such as fertilizers, vitamins, micronutrients, macronutrients, humectants, wetting agents, pesticides such as insecticides, fungicides and herbicides, or growth regulators or biostimulants in the range of 0.1 to 10 wt. % of the suspension.

The seed with the present suspension achieves higher germination and emergence of crops compared to untreated seeds, binding the soil moisture and the necessary nutrients directly to the seed and then releasing them in times of scarcity. The result is higher hectare yield, higher biomass production, plant resistance to pests and higher survival rates for young plants. The result is also the efficiency of used raw materials (SAP or fertilizers). The present invention encompasses the development of a superabsorbent-based suspension formulation suitable for hydrostimulatory coating of seeds and a method of coating the seeds with this suspension.

In particular, the present invention regulates the time required to coat the seed, reduces the amount of ingredients required, and ensures a more even distribution of the ingredients.

The use of superabsorbents to coat the seeds gives the possibility to ensure higher germination and followed by growth of green matter in order to achieve higher yields. However, superabsorbents must be applied very homogeneously to the seed surface in order to maximize their effectiveness. The application of superabsorbents for seed coating is most desirable for planting in semi-dry and dry areas.

The main innovation of the present invention, which obviates most of the drawbacks of the prior art, is the use of a liquid continuous phase as the carrier in which SAP is dispersed, as well as the other components that the suspension comprises. The liquid continuous phase with the carrier function is based on ethanol and/or isopropanol and, in addition to the carrier function and the continuous liquid medium, it has the task of temporarily blocking the ability of SAP to absorb water until the volatile components of the suspension have evaporated.

The liquid continuous phase of the suspension allows to evenly wet the entire surface of the seed, thus solving the problem of homogeneity of SAP application. Unlike SAP dust particles without a liquid continuous phase, it is able to efficiently get into all the uneven parts and creases while the surface coverage with SAP is uniform at all points of the seed surface. The homogeneity of the coating is also when comparing the individual seeds in the batch as well as between the different batches.

In addition to ensuring even seed coverage with SAP, reliable control of the application rate of SAP is ensured by varying the SAP concentration in the suspension, or by changing the SAP particle size in the suspension respectively. This always ensures that the optimum amount of SAP is applied to the seed, which results in a uniform germination and emergence dynamics for all seeds of the seed unit and thus ultimately a balanced stand. A balanced stand is the way to higher yield.

An important aspect of the present invention is the superabsorbent content of 25 to 40 wt. % of the suspension. Too high an amount of the superabsorbent on the seed surface results in seed suffocation, high water uptake in the immediate vicinity of the seed, thereby preventing sufficient oxygen access and removal of germinated seed metabolites. Also, the superabsorbent may not be sufficiently covered by the adhesive and the superabsorbent will thus remain exposed, resulting in higher hygroscopicity, air humidity absorption, agglomeration, and individual seed and dustiness bonding. Sticky seed cannot be processed technologically, transported or sieved without problems. In addition, increased dust levels do not meet the required dust standard. Conversely, too low an amount of the superabsorbent on the surface of the seed, especially in dry areas, leads to a lack of moisture, low seed germination and plant emergence. Low superabsorbent compositions on the seed surface are known in the art and have the disadvantages mentioned above. Non-homogeneous or varying amount of superabsorbent deposited on the seed results in an uneven plant growth.

The present invention simplifies the seed treatment process, since it is not necessary to pre-wet the seed or to apply an adhesive layer thereon, but due to the incorporated adhesive component (e.g. PVAc) in the suspension, dry seed can also be treated directly without pre-treatment. Thus, the time required for seed treatment is saved and the application of this method is expanded. At the same time, the adhesive component also functions as a film-forming component. smoothing the surface of the treated seed. Thus, the SAP attachment is stable and at the same time the SAP particles become a monolithic part of the coating without significantly projecting SAP particles, eliminating the problem of unstable SAP attachment to the seed surface, which also eliminates the problem of seed flow properties as the treated seeds do not get stuck.

After seed treatment, SAP particles are protected by a film-forming component (e.g., PVAc) from air humidity, thereby eliminating the problem of high susceptibility of SAP to air humidity, and subsequently bonding the treated seeds to each other and forming clumps.

An important aspect of the present invention is the content of dispersion or solution of adhesives, comprising water in the range of 0.1 to 8 wt. % of the suspension, ethanol and/or isopropanol in the range of 40 to 70 wt. % of the suspension and adhesive in the range of 1 to 10 wt. % of the suspension. Too high an amount of adhesive prevents seed germination because the seed spends too much starter nutrients and energy to break through the adhesive layer, with not enough left for further growth leading to plant death. If the water concentration is too high and the ethanol concentration is too low, water is absorbed by the superabsorbent, agglomeration forms and individual seeds stick together, which is a technological obstacle to seed processing. Too high a concentration of ethanol has an adverse effect on the seed due to the biological processes occurring during germination as well as the increased cost of work safety conditions.

Other components of the suspension, namely talc and flake graphite, also have a beneficial effect on the flow properties of the seed. They also counteract the mutual bonding of the seeds and the formation of clumps, especially after evaporation of the volatile components of the suspension. In addition, graphite, due to its ability to conduct electricity, reduces the accumulated electric charge in the seed, which results from the friction of the seed during the coating process in the seed dressing device, but also partly during transport, or in the case of seed transfer respectively. The reduction of the electric charge in the seed reduces the formation of clumps in the seed.

An important aspect of the present invention is the content of lubricant in the range of 0.1 to 15 wt. % of the suspension and the content of antistatic additive in the range of 0.1 to 5 wt. % of the suspension. Too high an amount of lubricant additives leads to an incomplete film on the seed surface and to higher dustiness. Similarly, too high an amount of antistatic additives leads to higher dustiness. Conversely, too low an amount of lubricant and antistatic additives leads to the formation of agglomerates from individual seeds, unacceptable flow properties and to the formation of electric charge that promotes the aggregation of the seeds into agglomerates.

Furthermore, it is important to note that the contents of the individual components are the result of long-term testing (min. 3-year cycles) in real conditions (farms, fields in different climatic conditions) and in statistically relevant quantities. The stated contents of the components in the present suspension are a compromise of optimal seed physiology and optimal processing (suspension preparation, storage, suspension application to seed, seed drying, flow properties).

SAP dosing in the form of a suspension allows the full use of seed dressing devices, as opposed to current methods, where it was not possible to use liquid dosing equipment for SAP dosing purposes. The SAP dosing in the form of a suspension accelerates the seed treatment process and thus makes it possible to use any seed dressing device with a liquid dosing device, without the need for an additional powder dosing device.

The dispensing of SAP in the form of a suspension also allows the use of continuous seed dressing devices.

The liquid continuous phase of the suspension can also be used as a carrier for active substances (nutrients, fertilizers, vitamins, micronutrients, macronutrients, minerals, inoculants, humectants, pesticides such as insecticides, fungicides, herbicides, biocides and biopesticides, biofertilizers, growth regulators or biostimulants and the like), preferably in the amount of 0.1 to 10 wt. % of the suspension, which after evaporation of the volatile components become part of the seed film formed, and also as an anchoring agent. The function of anchoring the seed in the substrate (in the ground) is to penetrate the formed gel around the seed into the substrate capillaries that is in direct contact with the seeds. The resulting bond of seed to the substrate prevents the seed from being forced out by the roots out of the soil, resulting in slowing down the root growth. The anchoring also prevents the seed from being forced out of the ground or towards the surface. The anchoring of the seed results in a faster root growth in depth, thus providing faster access to the water source. Another benefit of this in-depth stabilization is that the seed emerges more evenly, which ensures a more even crop. The uniformity of the stand has a higher yield.

Examples of the active agents useful in the present suspension include, but are not limited to, nutrients, fertilizers, vitamins, micronutrients, macronutrients, minerals, inoculants, humectants, pesticides such as insecticides, fungicides, herbicides, biocides and biopesticides, biofertilizers, growth regulators or biostimulants. Nutrients, micronutrients, macronutrients and minerals are substances providing the necessary nutrients for plant growth and life and may be selected from the group comprising nitrogen, phosphorus, potassium, calcium, magnesium, sulphur, boron, copper, iron, chloride, manganese, molybdenum, and zinc. Fertilizers are plant nutrients and can be selected from the group comprising nitrogen, phosphorus and potassium fertilizers, combinations thereof and organic fertilizers. Biofertilizers are a subset of fertilizers and may include microorganisms of the genera Rhizobium, Azotobacterium, Azospirillum, blue-green algae or phosphate-dissolving bacteria. Vitamins may include B, C and E vitamins. The inoculants are growth promoting microorganisms and may be selected from the group comprising Rhizobium, Agrobacterium, and mycorrhizal fungi, e.g. of the genus Glomeromycota. Humectants are substances that wet the surface and form a so-called conductive zone in the soil and include e.g. surfactants, hydrophilic chains, etc.

Pesticides and insecticides are substances intended to kill insects or other organisms damaging cultivated plants and may be selected from the group comprising organophosphate pesticides, carbamate pesticides (e.g., thiram), organochlorine insecticides, pyrethroid pesticides, and microbial pesticides. Biopesticides are a subset of pesticides and may include microbial biopesticides, e.g. microbes of the genera Bacillus, Trichoderma, Agrobacterium, Paecilomyces, Azospirillum, Glomus, Bradyrhizobium, Paenibacillus, Rhizobium and Enterobacter, or metabolites produced by these microbes, e.g. siderophores, bacillibactin, antibiotics, enzymes, phytohormones, lipopeptides, antibacterial polyketides and fungicidal metabolites. Fungicides are fungal and mold killers and may be selected from the group comprising dimethomorph, mancozeb, tricyclazole, carbendazim, hexaconazole, metalaxyl, benomyl, diphenoconazole, propiconazole, kitazine, tebuconazole, copper (I) chloride trihydroxide, copper (I) hydroxide, tridemorph and propineb. Herbicides are substances intended to kill unwanted vegetation and weeds and may be selected from the group comprising phenoxy acids, benzoic acid, dinitroaniline, bipyridylium salts, substituted ureas, and arsenic compounds.

Growth regulators include promoters and growth inhibitors, e.g. auxins, gibberellins, cytokinins (promoters) or abscisic acid (inhibitor). Biostimulants are substances enhancing nutrient efficiency, abiotic stress tolerance, and/or crop quality properties and may include biofertilizers, growth regulators, inoculants, fulvonic acids, humic acids, humines, protein hydrolysates, betaines (e.g., glycine-betaine), polyamines, extracts of seaweed and chitosan.

Another essential aspect of said contents of the individual components of the present suspension is the resulting viscosity of the suspension, which affects the wetting of the seed surface in the seed dressing device. A suitably selected viscosity makes it possible to utilize the current devices used for coating or seed treatment. If the viscosity was too high, the pumps and distribution discs in the device could not be used, and at the same time the seed surface would not be sufficiently and homogeneously wetted and hence coated. Thus, the viscosity also affects the amount that is retained on the seed surface.

As seeds, corn, wheat and other cereal seeds such as barley, oats, rye, rice, sunflower seeds, rape seed, sugar beet, soybean, cotton, sorghum, fruit, vegetables, grass and other small seeds such as beans, peas, lentils, peanuts or rice can be used. The suspension may also be applied to vegetable and fruit seeds, such as e.g. cucumber, tomato and the like.

It is an object of the present invention to achieve increased seed germination by SAP in dry and semi-dry areas, to improve flow properties in seed transport and seed application in order to increase SAP deposition efficiency on the seed, increase seed SAP uniformity, suppress formation of seed clumps during the coating process as well as after the coating process, to use the SAP as a carrier for the active substances, to use the SAP as a deep seed stabilizer.

The method of coating of seeds with the superabsorbent-based suspension according to the invention, comprises the dosing of the suspension comprising the superabsorbent, the adhesives in a solution of water and ethanol and/or water and isopropanol, the lubricant and antistatic additives for 5 to 20 seconds to seed in the seed dressing device, then releasing the coated seeds from the seed dressing device for 1 to 10 seconds. The suspension is dosed in the amount of 0.1 to 15 wt. %, preferably from 1 to 10 wt. %, e.g. from 1 to 5 wt. % or from 1 to 2.5 wt. % with regard to seed weight and type. The amount of the suspension to be dosed is also dependent on the quality of the seed itself, in particular its purity, or dustiness respectively. As dustiness increases, the dosage of the suspension increases for all crops. At the same time, the risk of agglomerate formation due to dust increases.

In a preferred embodiment of the method of coating of seeds, the suspension comprises the active substances as mentioned above.

### Description of the Drawings

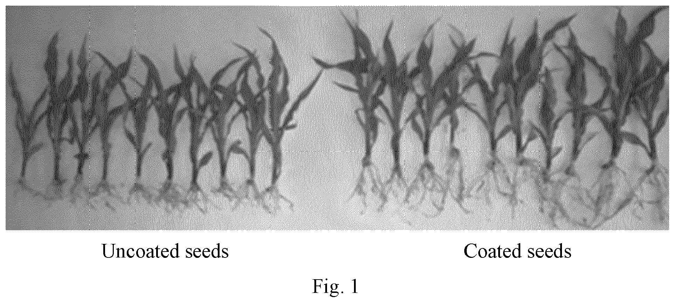

The invention will be further supported by the figures, where Fig. 1 shows germinated corn plants of uncoated (left) and coated (right) seeds with the present suspension.

### Exemplary Embodiments

The implementation of the present invention will be explained by means of examples. The preferred embodiment has no limiting effect on the scope of protection. The terms in singular and plural number used in the text of the application and in the claims are used interchangeably (e.g. adhesive - adhesives).

### Example 1:

Table 1 below shows exemplary compositions of the present suspension suitable for hydrostimulatory coating of soybean, sorghum, sugar beet, corn, wheat and rape seed. Weight % are given relative to 100 % by weight of the resulting suspension.

**Table 1. Exemplary compositions of the present suspension on different types of seeds.**

| **Seed** | **SAP** | **Water** | **Ethanol** | **Adhesive** | **Lubricant additive** | **Antistatic additive** |
|---|---|---|---|---|---|---|
| | [wt. %] | [wt. %] | [wt. %] | [wt. %] | [wt. %] | [wt. %] |
| Soybean | 36.0 | 2.4 | 46.4 | 8.0 | 6.2 | 1.0 |
| Sorghum | 39.5 | 2.1 | 49.7 | 7.0 | 0.8 | 0.9 |
| Sugar beet | 32.7 | 3.6 | 51.9 | 6.0 | 4.6 | 1.2 |
| Corn | 26.7 | 3.4 | 61.9 | 4.0 | 2.0 | 2.0 |
| Wheat | 26.3 | 5.8 | 50.8 | 9.6 | 5.3 | 2.2 |
| Rape seed | 28.4 | 4.5 | 53.6 | 3.8 | 5.6 | 4.1 |

### Example 2:

The method of coating the seed with the present suspension comprises dosing of a suspension comprising a copolymer of potassium acrylate and acrylamide, polyvinyl acetate in a solution of water and ethanol, talc and flake graphite for 10 seconds onto a wheat seed in a seed dressing device, followed by releasing the coated wheat seed from the seed dressing device for 3 seconds. The seed coated with the suspension is then dried. The result is an evenly coated wheat seed that does not stick to other seeds.

### Example 3:

The method of coating the seed with the present suspension comprises dosing of a suspension comprising a copolymer of potassium acrylate and acrylamide, polyvinyl acetate in a solution of water and ethanol, polypropylene and flake graphite for 16 seconds onto a corn seed previously coated with pesticide (active agent) in a seed dressing plant, followed by releasing the coated corn seed from the seed dressing device for 6 seconds. The seed coated with the suspension is then dried. The result is an evenly coated corn seed that does not stick to other seeds. In addition, the pesticide layer is protected by the layer of the present suspension, which reduces dustiness and abrasion of the individual seeds.

### Example 4:

The method of coating the seed with the present suspension comprises dosing of a pesticide (active ingredient) onto a rape seed in a seed dressing device, immediately thereafter dosing of a suspension comprising a copolymer of potassium acrylate and acrylamide, polyvinylpyrrolidone in a solution of water and ethanol, talc and flake graphite onto a rape seed in a seed dressing device for 5 seconds, followed by releasing the coated rape seed from the seed dressing device for 2 seconds. The seed coated with the suspension is then dried. The result is a uniformly pesticide-treated and coated rape seed that does not stick to other seeds. The dosing of the pesticide (active substance) and the present suspension was also reduced in one step without the need to release the seed from the seed dressing device.

### Example 5:

The method of coating the seed with the present suspension comprises dosing of a suspension comprising a copolymer of potassium acrylate and acrylamide, polyvinyl acetate in a solution of water and ethanol, talc, flake graphite and a biostimulant (active agent) for 15 seconds onto a soybean seed in the seed dressing device, followed by releasing the coated soybean seed from the seed dressing device for 9 seconds. The seed coated with the suspension is then dried. The result is evenly biostimulant-treated and coated soybean seed that does not stick to other seeds.

### Example 6:

A comparison of a rape seed having a hydrostimulatory coating with the present suspension and a rape seed without a hydrostimulatory coating at 3 different testing stations in the Czech Republic exposed to different climatic conditions (A - Chlumec nad Cidlinou, B - Opava, C - Lužany u Přeštic), see Table 2. Above-average dry conditions were recorded at testing station B, which was reflected in the highest yield (19%) compared to the control.

**Table 2. Comparison of rape seed yields with and without the present suspension.**

| **Testing station** | **A** | **B** | **C** |
|---|---|---|---|
| Coated seeds | 5,39 | 3,22 | 6,13 |
| Uncoated seeds | 5,11 | 2,70 | 5,85 |
| Yield increase | 5% | 19 % | 5% |

### Example 7:

Mean values of germination and growth parameters of wheat seed coated with the present suspension as compared to control uncoated seed, see Table 3. The present suspension had a positive effect on all measured parameters. The seed coated with the present suspension achieved better germination, fewer abnormalities and pathologies in the germinated plants, and more above-ground and underground biomass.

**Table 3. Mean values of germination and growth parameters of wheat seeds.**

| **Parameter** | **Coated seed** | **Uncoated seed** |
|---|---|---|
| Germination rate after 48 h [%] | 94,17 | 83,33 |
| Germination rate after 192 h [%] | 97,50 | 93,75 |
| Ungerminated seeds [%] | 2,50 | 6,25 |
| Abnormally germinated seeds [%] | 1,25 | 2,15 |
| Pathologies in germination [%] | 3,75 | 8,40 |
| Stem length [mm] | 64,27 | 56,59 |
| Number of roots [pcs/plant] | 3,88 | 3,67 |
| Root length [mm/plant] | 278,48 | 262,48 |
| Biomass weight [mg/plant] | 14,38 | 13,51 |

### Example 8:

Fig. 1 shows germinated corn plants of uncoated (left) and coated (right) seeds with the present suspension. Plants germinated from the coated seeds have a greater amount of biomass, a better developed root system and leafy parts compared to uncoated plants.

### Example 9:

The Heubach test is used to determine the amount of free-flowing dust and abrasion particles around the treated seed under defined mechanical stress conditions. The value recommended by the European Seed Treatment Assurance (ESTA) is 0.5 g particles/700,000 seeds. In the case of the rape seed coated with the present suspension, a value of 0.1783 g particles/700,000 seeds was reached, which is below the recommended limit. The low dustiness and abrasion of seeds are particularly appreciated in terms of work safety (especially in the case of e.g. pesticide treatment) and the efficiency of the entire coating process, namely the amount of coating that remains on the seed.

### Industrial Applicability

The present invention is applicable to the coating of seeds of agricultural and horticultural crops in order to improve germination, improve stand balance, accelerate water access to roots, stabilize seed position in the substrate and increase yields. It is also applicable to the coating of granular and microgranular fertilizers with the aim of binding the nutrients and substances comprised therein with subsequent sustained release.

## Claims

1. A superabsorbent-based suspension suitable for hydrostimulatory coating of seeds, comprising a superabsorbent in the form of a copolymer of acrylate and acrylamide, adhesives dispersed or dissolved in a solution and lubricant additives suitable for improving flow properties of seeds, wherein the suspension comprises the adhesives in the range of 1 to 10 wt. % of the suspension, **characterized in that** the adhesives are dispersed or dissolved in a solution of water and ethanol and/or of water and isopropanol, wherein the suspension comprises the superabsorbent in the range of 25 to 40 wt. % of the suspension, the dispersion or solution of the adhesives comprising water in the range of 0.1 to 8 wt. % of the suspension and ethanol and/or isopropanol in the range of 40 to 70 wt. % of the suspension, and further the lubricant additives in the range of 0.1 to 15 wt. % of the suspension, wherein the suspension further comprises an antistatic additive suitable for eliminating electric charge in the range of 0.1 to 5 wt. % of the suspension.

2. The suspension according to claim 1, **characterized in that** the superabsorbent is a copolymer of potassium acrylate and acrylamide.

3. The suspension according to claim 1 or 2, **characterized in that** the adhesive is polyvinyl acetate, hydroxymethyl cellulose, hydroxyethyl cellulose, hydroxypropyl cellulose, carboxymethyl cellulose, polyvinylpyrrolidone, lignin sulphonate, acacia or carbohydrates.

4. The suspension according to claim 1, 2 or 3, **characterized in that** the lubricant additives are graphite, talc, molybdenum disulphide, polytetrafluoroethylene, polypropylene or mixtures thereof.

5. The suspension according to claim 1, 2, 3 or 4, **characterized in that** the antistatic additive is flake graphite.

6. The suspension according to any one of the preceding claims, **characterized in that** it comprises active substances for improving properties of the seed, wherein the active substances for improving properties of the seed are selected from the group comprising nutrients, fertilizers, vitamins, micronutrients and macronutrients, minerals, inoculants, humectants, pesticides such as insecticides, fungicides, herbicides, biocides and biopesticides, biofertilizers, growth regulators or biostimulants.

7. The suspension according to claim 6, **characterized in that** it comprises the active substances for improving properties of the seed in the range of 0.1 to 10 wt. % of the suspension.

8. The suspension according to any one of claims 1 to 7, **characterized in that** the coated seed is in particular corn, wheat and other cereal seeds such as barley, oats, rye, rice, sunflower seeds, rape seed, sugar beet, soybean, cotton, sorghum, chickpea, fruits, vegetables, grass and other small seeds such as beans, peas, lentils, peanuts.

9. A method of coating a seed with the suspension according to claims 1 to 8, **characterized in that** it comprises dosing of the suspension comprising superabsorbent, adhesives in a solution of water and ethanol and/or water and isopropanol, lubricant and antistatic additives for 5 to 20 seconds onto the seed in the seed dressing device, followed by releasing the coated seed from the seed dressing device for 1 to 10 seconds and drying the coated seed.

10. The method according to claim 9, **characterized in that** the suspension is dosed in the amount of 0.1 to 15 wt. % with reference to the weight of the seed.

11. The method according to claim 9 or 10, **characterized in that** the suspension is dosed onto the seed previously treated with at least one active substance from the group comprising a nutrient, fertilizer, vitamin, micronutrient and macronutrient, mineral, inoculant, humectant, pesticide, insecticide, herbicide, fungicide, biocide, biopesticide, biofertilizer, growth regulator or biostimulant.

12. The method according to claim 9 or 10, **characterized in that** it comprises dosing of the active ingredient onto the seed immediately before dosing of the suspension, wherein the active substance is selected from the group comprising a nutrient, fertilizer, vitamin, micronutrient and macronutrient, mineral, inoculant, humectant, pesticide, insecticide, herbicide, fungicide, biocide, biopesticide, biofertilizer, growth regulator or biostimulant.

13. The method according to claim 9 or 10, **characterized in that** the suspension comprises the active substances selected from the group comprising a nutrient, fertilizer, vitamin, micronutrient and macronutrient, mineral, inoculant, humectant, pesticide, insecticide, herbicide, fungicide, biocide, biopesticide, biofertilizer, growth regulator or biostimulant.

## Patentansprüche

1. Eine auf Superabsorbens basierende Suspension zur hydrostimulatorischen Beschichtung von Saatgut, umfassend ein Superabsorbens in Form eines Copolymers aus Acrylat und Acrylamid, in einer Lösung dispergierte oder gelöste Klebstoffe, und Schmiermitteladditive, die zur Verbesserung der Fliesseigenschaften von Saatgut geeignet sind, wobei die Suspension die Klebstoffe im Bereich von 25 bis 40 Gew.-% der Suspension umfasst, **dadurch gekennzeichnet, dass** die Klebstoffe in einer Lösung von Wasser und Ethanol und/oder von Wasser und Isopropanol dispergiert oder gelöst sind, wobei die Suspension das Superabsorbens im Bereich von 25 bis 40 Gew.-% der Suspension, die Dispersion oder Lösung der Klebstoffe umfassend Wasser im Bereich von 0,1 bis 8 Gew.-% der Suspension und Ethanol und/oder Isopropanol im Bereich von 40 bis 70 Gew.-% der Suspension, und ferner die Schmiermitteladditive im Bereich von 0,1 bis 15 Gew.-% der Suspension umfasst, wobei die Suspension ferner ein antistatisches Additiv zur Eliminierung von elektrischer Landung im Bereich von 0,1 bis 5 Gew.-% der Suspension umfasst.

2. Die Suspension nach Anspruch 1, **dadurch gekennzeichnet, dass** das Superabsorbens ein Copolymer aus Kaliumacrylat und Acrylamid ist.

3. Die Suspension nach Anspruch 1 oder 2, **dadurch gekennzeichnet, dass** der Klebstoff Polyvinylacetat, Hydroxymethylcellulose, Hydroxyethylcellulose, Hydroxypropylcellulose, Carboxymethylcellulose, Polyvinylpyrrolidon, Ligninsulfonat, Akaziengummi oder Kohlenhydrate ist.

4. Die Suspension nach Anspruch 1, 2 oder 3, **dadurch gekennzeichnet, dass** die Schmiermitteladditive Graphit, Talkum, Molybdändisulfid, Polytetrafluorethylen, Polypropylen oder Mischungen davon sind.

5. Die Suspension nach Anspruch 1, 2, 3 oder 4, **dadurch gekennzeichnet, dass** das antistatische Additiv Flockengraphit ist.

6. Die Suspension nach einem der vorhergehenden Ansprüche, **dadurch gekennzeichnet, dass** sie Wirkstoffe zur Verbesserung der Eigenschaften des Saatguts umfasst, wobei die Wirkstoffe zur Verbesserung der Eigenschaften des Saatguts ausgewählt sind aus der Gruppe umfassend Nährstoffe, Düngemittel, Vitamine, Mikronährstoffe und Makronährstoffe, Mineralien, Impfmittel, Feuchthaltemittel, Pestizide wie Insektizide, Fungizide, Herbizide, Biozide und Biopestizide, Biodüngemittel, Wachstumsregulatoren oder Biostimulantien.

7. Die Suspension nach Anspruch 6, **dadurch gekennzeichnet, dass** sie die Wirkstoffe zur Verbesserung der Eigenschaften des Saatguts im Bereich von 0,1 bis 10 Gew.-% der Suspension umfasst.

8. Die Suspension nach einem der Ansprüche 1 bis 7, **dadurch gekennzeichnet, dass** das beschichtete Saatgut insbesondere Mais, Weizen und andere Getreidesamen, wie Gerste, Hafer, Roggen, Reis, Sonnenblumensamen, Rapssamen, Zuckerrübe, Soja, Baumwolle, Sorghum, Kichererbse, Früchte, Gemüse, Gras und andere kleine Samen, wie Bohnen, Erbsen, Linsen, Erdnüsse, ist.

9. Ein Verfahren zur Beschichtung von Saatgut mit der Suspension nach den Ansprüchen 1 bis 8, **dadurch gekennzeichnet, dass** es eine Dosierung der Suspension umfassend Superabsorbens, Klebstoffe in einer Lösung von Wasser und Ethanol und/oder Wasser und Isopropanol, Schmiermitteladditive und antistatische Additive für 5 bis 20 Sekunden auf das Saatgut in einer Saatgutbeschichtungsmaschine umfasst, gefolgt vom Freisetzen des beschichteten Saatguts von der Saatgutbeschichtungsmaschine für 1 bis 10 Sekunden und Trocknen des beschichteten Saatguts.

10. Das Verfahren nach Anspruch 9, **dadurch gekennzeichnet, dass** die Suspension in einer Menge von 0,1 bis 15 Gew.-% bezogen auf das Gewicht des Saatguts dosiert wird.

11. Das Verfahren nach Anspruch 9 oder 10, **dadurch gekennzeichnet, dass** die Suspension auf das zuvor mit mindestens einem Wirkstoff, aus der Gruppe umfassend einen Nährstoff, Düngemittel, Vitamin, Mikronährstoff und Makronährstoff, Mineral, Impfmittel, Feuchthaltemittel, Pestizid, Insektizid, Herbizid, Fungizid, Biozid, Biopestizid, Biodüngemittel, Wachstumsregulator oder Biostimulans, behandelte Saatgut dosiert wird.

12. Das Verfahren nach Anspruch 9 oder 10, **dadurch gekennzeichnet, dass** es die Dosierung des Wirkstoffs unmittelbar vor der Dosierung der Suspension auf das Saatgut umfasst, wobei der Wirkstoff ausgewählt ist aus der Gruppe umfassend einen Nährstoff, Düngemittel, Vitamin, Mikronährstoff und Makronährstoff, Mineral, Impfmittel, Feuchthaltemittel, Pestizid, Insektizid, Herbizid, Fungizid, Biozid, Biopestizid, Biodüngemittel, Wachstumsregulator oder Biostimulans.

13. Das Verfahren nach Anspruch 9 oder 10, **dadurch gekennzeichnet, dass** die Suspension die Wirkstoffe, ausgewählt aus der Gruppe umfassend einen Nährstoff, Düngemittel, Vitamin, Mikronährstoff und Makronährstoff, Mineral, Impfmittel, Feuchthaltemittel, Pestizid, Insektizid, Herbizid, Fungizid, Biozid, Biopestizid, Biodüngemittel, Wachstumsregulator oder Biostimulans, umfasst.

## Revendications

1. Une suspension à base de superabsorbant appropriée pour l'enduction hydrostimulatrice de semences, comprenant un superabsorbant sous la forme d'un copolymère d'acrylate et d'acrylamide, des adhésifs dispersés ou dissous dans une solution, et des additifs lubrifiants appropriés pour améliorer les propriétés d'écoulement de semences, où la suspension comprend les adhésifs dans la plage de 1 à 10 % en poids de la suspension, **caractérisée en ce que** les adhésifs sont dispersés ou dissous dans une solution d'eau et d'éthanol et/ou d'eau et d'isopropanol, où la suspension comprend le superabsorbant dans la plage de 25 à 40 % en poids de la suspension, la dispersion ou la solution des adhésifs comprenant de l'eau dans la plage de 0,1 à 8 % en poids de la suspension et de l'éthanol et/ou de l'isopropanol dans la plage de 40 à 70 % en poids de la suspension, et en outre les additifs lubrifiants dans la plage de 0,1 à 15 % en poids de la suspension, où la suspension comprend en outre un additif antistatique approprié pour éliminer la charge électrique dans la plage de 0,1 à 5 % en poids de la suspension.

2. La suspension selon la revendication 1, **caractérisée en ce que** le superabsorbant est un copolymère d'acrylate de potassium et d'acrylamide.

3. La suspension selon la revendication 1 ou 2, **caractérisée en ce que** l'adhésif est l'acétate de polyvinyle, l'hydroxyméthylcellulose, l'hydroxyéthylcellulose, l'hydroxypropylcellulose, la carboxyméthylcellulose, la polyvinylpyrrolidone, le sulfonate de lignine, l'acacia ou les glucides.

4. La suspension selon la revendication 1, 2 ou 3, **caractérisée en ce que** les additifs lubrifiants sont le graphite, le talc, le disulfure de molybdène, le polytétrafluoroéthylène, le polypropylène ou leurs mélanges.

5. La suspension selon la revendication 1, 2, 3 ou 4, **caractérisée en ce que** l'additif antistatique est le graphite de flocons.

6. La suspension selon l'une quelconque des revendications précédentes, **caractérisée en ce qu'**elle comprend des substances actives pour améliorer les propriétés de la semence, où les substances actives pour améliorer les propriétés de la semence sont choisies dans le groupe comprenant les nutriments, les engrais, les vitamines, les micronutriments et les macronutriments, les minéraux, les inoculants, les humectants, les pesticides tels que les insecticides, les fongicides, les herbicides, les biocides et les biopesticides, les engrais biologiques, les régulateurs de croissance ou les biostimulants.

7. La suspension selon la revendication 6, **caractérisée en ce qu'**elle comprend les substances actives pour améliorer les propriétés de la semence dans la plage de 0,1 à 10 % en poids de la suspension.

8. La suspension selon l'une quelconque des revendications 1 à 7, **caractérisée en ce que** la semence enrobée est en particulier du maïs, du blé et d'autres graines de céréales telles que l'orge, l'avoine, le seigle, le riz, les graines de tournesol, les graines de colza, la betterave à sucre, le soja, le coton, le sorgho, le pois chiche, les fruits, les légumes, l'herbe et d'autres petites semences telles que les haricots, les pois, les lentilles, les arachides.

9. Un procédé d'enduction de semences au moyen de la suspension selon les revendications 1 à 8, **caractérisé en ce qu'**il comprend le dosage de la suspension comprenant un superabsorbant, des adhésifs dans une solution d'eau et d'éthanol et/ou d'eau et d'isopropanol, des additifs lubrifiants et antistatiques pendant 5 à 20 secondes sur la semence dans une machine d'enrobage des semences, puis la libération de la semence enrobée à partir de la machine d'enrobage des semences pour 1 à 10 secondes et le séchage de la semence enrobée.

10. Le procédé selon la revendication 9, **caractérisé en ce que** la suspension est dosée en une quantité de 0,1 à 15 % en poids par rapport au poids de la semence.

11. Le procédé selon la revendication 9 ou 10, **caractérisé en ce que** la suspension est dosée sur la semence préalablement traitée avec au moins une substance active du groupe comprenant un nutriment, un engrais, une vitamine, un micronutriment et un macronutriment, un minéral, un inoculant, un humectant, un pesticide, un insecticide, un herbicide, un fongicide, un biocide, un biopesticide, un engrais biologique, un régulateur de croissance ou un biostimulant.

12. Le procédé selon la revendication 9 ou 10, **caractérisé en ce qu'**il comprend le dosage de la substance active sur la semence immédiatement avant le dosage de la suspension, où la substance active est choisie dans le groupe comprenant un nutriment, un engrais, une vitamine, un micronutriment et un macronutriment, un minéral, un inoculant, un humectant, un pesticide, un insecticide, un herbicide, un fongicide, un biocide, un biopesticide, un engrais biologique, un régulateur de croissance ou un biostimulant.

13. Le procédé selon la revendication 9 ou 10, **caractérisé en ce que** la suspension comprend les substances actives choisies dans le groupe comprenant un nutriment, un engrais, une vitamine, un micronutriment et un macronutriment, un minéral, un inoculant, un humectant, un pesticide, un insecticide, un herbicide, un fongicide, un biocide, un biopesticide, un engrais biologique, un régulateur de croissance ou un biostimulant.
